# EUROPEAN PATENT APPLICATION

(11) **EP 2 563 049 A1**
(43) Date of publication of application: **27.02.2013**
(21) Application number: 11360041.5
(22) Date of filing: 24.08.2011
(51) Int. Cl.: H04W 4/06

(54) **Controlling user equipment autonomous carrier prioritisation for MBMS services during cell reselection**

(71) Applicant: Alcatel Lucent, 75007 Paris (FR)
(72) Inventor: Palat, Sudeep k., Swindon Wiltshire, SN5 6EE (GB); Worrall, Chandrika K, Berkshire, RG14 6SN (GB)
(74) Representative: Script IP Limited

(57) **Abstract**

A method in a network access node, a network access node, a method in user equipment, user equipment and computer program products are disclosed. The method in a network access node comprises: detecting that user equipment carrier control during cell reselection is required; and providing an indication to user equipment which indicates whether to utilise user equipment autonomous carrier prioritisation for Multimedia Broadcasts-Multimedia Services during cell reselection. Accordingly, the network is able to control whether user equipment utilises autonomous carrier prioritisation for MBMS services during cell reselection, or whether user equipment instead only uses the information within the priority list to select a carrier during cell reselection. This avoids a large signalling overhead, but at the same time provides for network control of the user equipment.

## Description

### FIELD OF THE INVENTION

The present invention relates to a method in a network access node, a network access node, a method in user equipment, user equipment and computer program products.

### BACKGROUND

Wireless telecommunications systems are known. In those known systems, radio coverage is provided to user equipment, for example mobile telephones, by geographical areas known as cells. A base station is located in each cell to provide the radio coverage. User equipment in each cell receives information data from the base station and transmits information data to the base station.

Information and data transmitted by the base station to the user equipment occurs on channels of radio carriers known as downlink carriers. Information and data transmitted by user equipment to the base station occurs on uplink data channels of radio carriers known as uplink carriers.

Base stations may support cells by transmitting one or more carriers. Typically, cells supported by neighbouring base stations will be provided by carriers transmitted on different frequencies. User equipment is typically provided with carrier information in a priority list which indicates the priorities of carriers for use during any cell reselection procedures. In particular, user equipment is typically required to reselect the highest priority carrier available.

Multi-media broadcast/multi-media services (MBMS) may be provided to user equipment. In particular, user equipment which are capable of receiving MBMS services may indicate those MBMS services which may be of interest to the user equipment. The user equipment will then attempt to receive the MBMS services of interest on carriers which are indicated as carrying the MBMS services of interest.

When user equipment is interested in receiving an MBMS service, the user equipment will typically prioritise the carrier carrying the MBMS service over the other carriers indicated in the priority list when performing a cell reselection.

Although these approaches have help in cell reselection, unexpected consequences can occur.

Accordingly, it is desired to provide an improved technique for controlling user equipment carrier frequency selection during cell reselection.

### SUMMARY

According to a first aspect, there is provided a method in a network access node of controlling user equipment carrier selection during cell reselection, comprising: detecting that user equipment carrier control during cell reselection is required; and providing an indication to user equipment which indicates whether to utilise user equipment autonomous carrier prioritisation for Multimedia Broadcasts-Multimedia Services during cell reselection.

The first aspect recognises that in 3GPP TS 36.304, user equipment cell reselection follows a cell reselection procedure which selects a cell carrier based on information provided relating to the priority of the neighbouring carriers. The priorities of different Enhanced Universal Terrestrial Radio Access Network (E-UTRAN) carriers or inter-Radio Access Technology (RAT) carriers can be provided to the radio resource connection (RRC) idle mode user equipment via system information blocks (SIB) or through radio resource control signalling. That receivable carrier which is indicated as having the highest priority is then selected by the user equipment during any cell reselection procedure.

The first aspect also recognises that the MBMS reception status is not considered in the above-mentioned cell reselection procedure. Service continuity enhancement of MBMS capable idle mode user equipment can be realised by considering the MBMS reception status in the cell reselection procedure. It will be appreciated that one approach to accommodate MBMS reception status in cell reselection would be to make the network aware of the MBMS reception status of the user equipment. This would require the user equipment to inform the network of its MBMS reception interest. User equipment MBMS reception interest is dynamic and would change over time. Hence, mechanisms to provide the MBMS reception interest to the network by idle mode user equipment would increase the signalling load and result in unnecessary complexity. Carrier prioritisation can be performed in the user equipment based on user equipment MBMS reception capability. However, this may mean that all user equipment with MBMS reception capability would consider the carrier carrying the MBMS service as the highest priority carrier for cell reselection, regardless of whether the user equipment is currently interested in an MBMS service or not. Considering cell load, having all MBMS capable user equipment camping on the MBMS carrier without considering their MBMS reception status would result in potentially unbalanced cell load.

One approach to reduce this imbalance would be to allow user equipment to autonomously prioritise selection of the MBMS carrier over the other carriers in the priority list during cell reselection when the user equipment is interested or actually receiving an MBMS service. However, following this approach would mean that the network loses control of the carrier priorities for cell reselection when such autonomous user equipment MBMS carrier selection is introduced. Given that network control of carrier prioritisation helps load balancing among multiple carriers and multiple radio access technologies, moving away from this results in performance degradation.

Accordingly, a method of controlling user equipment carrier selection during cell selection or reselection is provided. The method may comprise detecting that carrier control is required. The method may also comprise providing an indication to user equipment which indicates whether to utilise user equipment autonomous carrier prioritisation for multi-media broadcasts/multi-media services during cell reselection. Accordingly, the network is able to control whether user equipment utilises autonomous carrier prioritisation for MBMS services during cell reselection, or whether user equipment instead only uses the information within the priority list to select a carrier during cell reselection. Such an approach may utilise user equipment autonomous carrier or frequency prioritisation combined with network control signalling to control the carrier or frequency prioritisation by user equipment. A new signal may be introduced such that the network is able to control the user equipment autonomous carrier prioritisation procedure. This avoids a large signalling overhead, but at the same time provides for network control of the user equipment.

In one embodiment, the indication comprises an information element which indicates one of enabling and disabling user equipment autonomous carrier prioritisation for Multimedia Broadcasts-Multimedia Services during cell reselection. Accordingly, the new signalling may be used to stop or to resume the user equipment autonomous carrier prioritisation procedure. Hence, when it is desired to prevent user equipment selecting particular frequency carriers for MBMS services, the autonomous carrier prioritisation procedure may be stopped, whereas it may be started when such MBMS carriers are desired to be selected.

In one embodiment, the information element indicates one of enabling and disabling user equipment autonomous carrier prioritisation for Multimedia Broadcasts-Multimedia Services during cell reselection for each of a plurality of carriers. Accordingly, control of each carrier frequency utilised by MBMS services may be performed. For example, should three carrier frequencies be supporting MBMS services and it is desired to prevent user equipment from selecting any one or more of those on cell reselection, then the information element may indicate that autonomous carrier prioritisation for that carrier frequency is disabled. This would help to reduce the probability of user equipment selecting that carrier when performing cell reselection.

In one embodiment, the plurality of carriers comprise carriers of a serving cell and of neighbouring cells.

In one embodiment, the information element is provided to a specified user equipment to indicate to that user equipment one of enabling and disabling user equipment autonomous carrier prioritisation for Multimedia Broadcasts-Multimedia Services during cell reselection. Accordingly, the information element may be only provided to particular user equipment in order to control those particular user equipment when performing cell reselection. For example, some user equipment may subscribe to be provided with a high priority MBMS service and so, irrespective of the loading on the carriers, it may be indicated to those user equipment to always use autonomous carrier prioritisation for MBMS services. Conversely, some user equipment may have a low priority subscription to MBMS services and an indication may be provided to those user equipment which disables autonomous carrier prioritisation for MBMS services during cell reselection, irrespective of the load on the MBMS carriers. This provides for a high degree of network control over user equipment cell reselection.

In one embodiment, the information element is provided in an Radio Resource Connection connection release message.

In one embodiment, the information element is provided in a dedicated Radio Resource Connection message.

In one embodiment, the information element is provided to user equipment within a cell to indicate to that user equipment one of enabling and disabling user equipment autonomous carrier prioritisation for Multimedia Broadcasts-Multimedia Services during cell reselection. Accordingly, all user equipment within a cell may be provided with an indication of whether to enable or disable autonomous carrier prioritisation for MBMS services during cell reselection. It will be appreciated that this may be provided for all carrier frequencies or only for specified carrier frequencies, as mentioned above.

In one embodiment, the information element is provided to at least one group of user equipment within a cell to indicate to each group of user equipment one of enabling and disabling user equipment autonomous carrier prioritisation for Multimedia Broadcasts-Multimedia Services during cell reselection. Hence, an indication can be provided to groups of user equipment to activate or deactivate autonomous carrier prioritisation of every user equipment within a particular group.

In one embodiment, the information element is provided in at least one system information block.

In one embodiment, system information block 3 provides the information element indicating one of enabling and disabling user equipment autonomous carrier prioritisation for Multimedia Broadcasts-Multimedia Services during cell reselection on a carrier of the serving cell and system information block 5 provides the information element indicating one of enabling and disabling user equipment autonomous carrier prioritisation for Multimedia Broadcasts-Multimedia Services during cell reselection on carriers of the neighbouring cells.

In one embodiment, the detecting comprises detecting an overload on at least one carrier and the providing the indication comprises indicating to the user equipment to deactivate user equipment autonomous carrier prioritisation for Multimedia Broadcasts-Multimedia Services on the at least one carrier during cell reselection.

In one embodiment, the detecting comprises detecting a high priority subscription Multimedia Broadcasts-Multimedia Services user equipment and the providing the indication comprises indicating to the a high priority subscription Multimedia Broadcasts-Multimedia Services user equipment to activate user equipment autonomous carrier prioritisation for Multimedia Broadcasts-Multimedia Services during cell reselection.

In one embodiment, the detecting comprises detecting a low priority subscription Multimedia Broadcasts-Multimedia Services user equipment and the providing the indication comprises indicating to the a low priority subscription Multimedia Broadcasts-Multimedia Services user equipment to deactivate user equipment autonomous carrier prioritisation for Multimedia Broadcasts-Multimedia Services during cell reselection.

According to a second aspect, there is provided a network access node operable to control user equipment carrier selection during cell reselection, comprising: detection logic operable to detect that user equipment carrier control during cell reselection is required; and transmission logic operable to provide an indication to user equipment which indicates whether to utilise user equipment autonomous carrier prioritisation for Multimedia Broadcasts-Multimedia Services during cell reselection.

In one embodiment, the indication comprises an information element which indicates one of enabling and disabling user equipment autonomous carrier prioritisation for Multimedia Broadcasts-Multimedia Services during cell reselection.

In one embodiment, the information element indicates one of enabling and disabling user equipment autonomous carrier prioritisation for Multimedia Broadcasts-Multimedia Services during cell reselection for each of a plurality of carriers.

In one embodiment, the plurality of carriers comprise carriers of a serving cell and of neighbouring cells.

In one embodiment, the information element is provided to a specified user equipment to indicate to that user equipment one of enabling and disabling user equipment autonomous carrier prioritisation for Multimedia Broadcasts-Multimedia Services during cell reselection.

In one embodiment, the information element is provided in one of a Radio Resource Connection Connection Release message and a dedicated Radio Resource Connection message.

In one embodiment, the information element is provided to user equipment within a cell to indicate to that user equipment one of enabling and disabling user equipment autonomous carrier prioritisation for Multimedia Broadcasts-Multimedia Services during cell reselection.

In one embodiment, the information element is provided to at least one group of user equipment within a cell to indicate to each group of user equipment one of enabling and disabling user equipment autonomous carrier prioritisation for Multimedia Broadcasts-Multimedia Services during cell reselection.

In one embodiment, the information element is provided in at least one system information block.

In one embodiment, system information block 3 provides the information element indicating one of enabling and disabling user equipment autonomous carrier prioritisation for Multimedia Broadcasts-Multimedia Services during cell reselection on a carrier of the serving cell and system information block 5 provides the information element indicating one of enabling and disabling user equipment autonomous carrier prioritisation for Multimedia Broadcasts-Multimedia Services during cell reselection on carriers of the neighbouring cells.

In one embodiment, the detection logic is operable to detect an overload on at least one carrier and the transmission logic is operable to provide the indication the user equipment to deactivate user equipment autonomous carrier prioritisation for Multimedia Broadcasts-Multimedia Services on the at least one carrier during cell reselection.

In one embodiment, the detection logic is operable to detect a high priority subscription Multimedia Broadcasts-Multimedia Services user equipment and the transmission logic is operable to provide the indication to the high priority subscription Multimedia Broadcasts-Multimedia Services user equipment to activate user equipment autonomous carrier prioritisation for Multimedia Broadcasts-Multimedia Services during cell reselection.

In one embodiment, the detection logic is operable to detect a low priority subscription Multimedia Broadcasts-Multimedia Services user equipment and the transmission logic is operable to provide the indication to the low priority subscription Multimedia Broadcasts-Multimedia Services user equipment to deactivate user equipment autonomous carrier prioritisation for Multimedia Broadcasts-Multimedia Services during cell reselection.

According to a third aspect, there is provided a method, in user equipment, of controlling carrier selection during cell reselection, comprising: receiving an indication which indicates whether to utilise user equipment autonomous carrier prioritisation for Multimedia Broadcasts-Multimedia Services during cell reselection; and performing one of enabling and disabling user equipment autonomous carrier prioritisation for Multimedia Broadcasts-Multimedia Services during cell reselection in response to the indication.

In one embodiment, the information element indicates one of enabling and disabling user equipment autonomous carrier prioritisation for Multimedia Broadcasts-Multimedia Services during cell reselection for each of a plurality of carriers and the method comprises determining whether Multimedia Broadcasts-Multimedia Services of interest are associated with at least one of the plurality of carrier and, if so, the performing comprises one of enabling and disabling user equipment autonomous carrier prioritisation for Multimedia Broadcasts-Multimedia Services during cell reselection in response to the indication for the at least one of the plurality of carriers.

In one embodiment, the method comprises: receiving carrier priority information; and, in response to disabling user equipment autonomous carrier prioritisation for Multimedia Broadcasts-Multimedia Services during cell reselection, performing cell reselection by selecting a detectable carrier having a highest priority indicated by the carrier priority information.

According to a fourth aspect, there is provided user equipment operable to control carrier selection during cell reselection, comprising: reception logic operable to receive an indication which indicates whether to utilise user equipment autonomous carrier prioritisation for Multimedia Broadcasts-Multimedia Services during cell reselection; and control logic operable to perform one of enabling and disabling user equipment autonomous carrier prioritisation for Multimedia Broadcasts-Multimedia Services during cell reselection in response to the indication.

In one embodiment, the information element indicates one of enabling and disabling user equipment autonomous carrier prioritisation for Multimedia Broadcasts-Multimedia Services during cell reselection for each of a plurality of carriers and the control logic is operable to determining whether Multimedia Broadcasts-Multimedia Services of interest are associated with at least one of the plurality of carriers and, if so, to perform one of enabling and disabling user equipment autonomous carrier prioritisation for Multimedia Broadcasts-Multimedia Services during cell reselection in response to the indication for the at least one of the plurality of carriers.

In one embodiment, the reception logic is operable to receive carrier priority information and the control logic is operable, in response to disabling user equipment autonomous carrier prioritisation for Multimedia Broadcasts-Multimedia Services during cell reselection, to perform cell reselection by selecting a detectable carrier having a highest priority indicated by the carrier priority information.

According to a fifth aspect, there is provided a computer program product operable, when executed on a computer, to perform the method of the first or third aspect.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

### BRIEF DESCRIPTION OF THE DRAWINGS

Embodiments of the present invention will now be described further, with reference to the accompanying drawings, in which:
Figure 1 illustrates the main components of a telecommunications network according to one embodiment;
Figure 2 illustrates the main message flow according to one embodiment; and
Figure 3 illustrates contents of a message according to one embodiment.

### DESCRIPTION OF THE EMBODIMENTS

### Network Overview

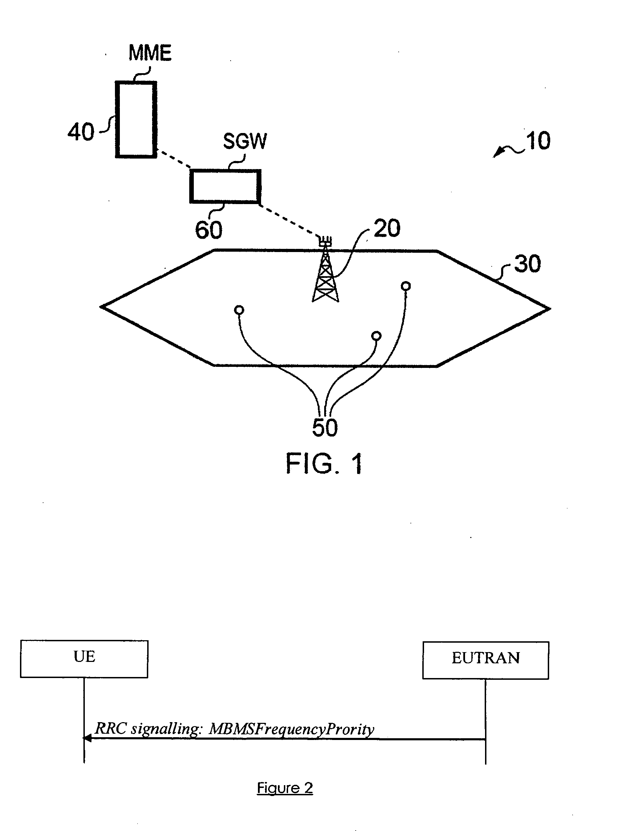

Figure 1 illustrates a wireless telecommunications system 10 according to one embodiment. User equipment 50 roam through the wireless telecommunications system. Base stations 20 are provided which support areas of radio coverage 30. A number of such base stations 20 are provided and are distributed geographically in order to provide a wide area of coverage to user equipment 50. When user equipment is within an area served by a base station 30, communications may be established between the user equipment and the base station over associated radio links. Each base station typically supports a number of sectors within the geographical area of service 30.

Typically a different antenna within a base station supports each associated sector. Accordingly, each base station 20 has multiple antennas and signals sent through the different antennas are electronically weighted to provide a sectorised approach. Of course, it will be appreciated that Figure 1 illustrates a small subset of the total number of user equipment and base stations that may be present in a typical communications system.

The wireless communications system is managed by Mobility Management Entity (MME). The MME 40 controls operation of the wireless communications system by communicating with a plurality of base stations via Serving Gateways (SGW) 60. The MME also communicates with user equipment 50 via each base station and thus effectively manages the wireless communications system.

MME 40 maintains location information which provides information on the location of user equipment 50 within the wireless communication system 10. The MME is operable to signal to SGW 60 to route data traffic through the telecommunications network, from a core network to user equipment and vice versa.

User equipment 50 typically transmits information and data to a base station 20 so that it can be re-routed within a wireless telecommunications network. User equipment may, for example, need to transmit data to the base station in order to relay text messages, voice information when a user is using the equipment to make a telephone call, or other data. The base station 20, in combination with parameters set by the MME 40, allocates resource to user equipment in a manner that aims to optimise operation of the wireless telecommunications network 10.

A radio link is a dedicated connection between user equipment 50 and a cell of a base station. These dedicated radio links are formed when user equipment is in an "RRC-Connected" state. When user equipment is not transmitting information such as text messages or voice information to a base station it is in a so-called "RRC-idle" state. When user equipment has information to transmit to a base station it initiates a RRC connection setup procedure to and switches to a connected state within which to operate. When in an "RRC-Connected" state user equipment is able to use high speed uplink packet access radio resources to achieve a high uplink throughput.

### User equipment cell reselection procedure

When user equipment wish to perform a cell reselection due to, for example, a mobility or other event, a new cell needs to be selected from the available cells. 3GPP TS 36.304 defines a user equipment cell reselection procedure which utilises information provided on the priority of neighbouring carriers. The priorities of different E-UTRAN carriers or inter-RAT carriers can be provided to idle user equipment via system information or via RRC connection control signalling as a priority list; for example, the system information transmitted within system information blocks or RRC connection control signalling may provide the relative priorities of, for example, five frequency carriers, F1, F2, F3, F4 and F5 in such a priority list. The priorities of these carrier frequencies may be set, for example, from F1 to F5, with F1 being the highest priority and F5 being the lowest priority.

When performing the cell reselection, the user equipment will try to attach first to the cell associated with carrier frequency F1 and, if that fails, will attempt to attach to the cell associated with F2, then F3, then F4 and then F5. Providing such a priority list to the user equipment enables the network to influence the distribution of user equipment among available frequency carriers.

### User equipment autonomous carrier prioritisation for MBMS

An enhancement to the basic cell reselection procedure indicated above is that for user equipment with MBMS capability, those user equipment which are interested in or actually receiving an MBMS service will reselect to a frequency carrier which provides that service in preference to the priorities of the frequency carriers mentioned in the priority list above. For example, if user equipment is interested in receiving an MBMS service, then details of the frequency carrier providing that MBMS service is provided to the user equipment. For example, it may be determined that the user equipment is interested in receiving an MBMS service and that MBMS service is provided on frequency carrier F4. Accordingly, in these circumstances, the user equipment would select frequency carrier F4 during cell reselection in order that the user equipment camps on to frequency carrier F4 to maintain the MBMS service, even though the priority list indicates that the user equipment should instead camp on to frequency carrier F1. Such functionality will be referred to as the user equipment autonomous prioritisation procedure.

As mentioned above, allowing such autonomous prioritisation for MBMS services may result in too many user equipment camping on to any particular frequency carrier, which may affect load balancing since too many connection requests may attempt to be established over a single frequency carrier.

### Autonomous prioritisation control

In order to provide for load balancing within an environment which seeks to support provision of MBMS services, various example techniques are mentioned below which control the use of user equipment autonomous prioritisation for MBMS services. These use the user equipment's autonomous prioritisation combined with network control signalling to control the frequency prioritisation by user equipment. This approach attempts to preserve both MBMS services and load balancing.

New RRC signalling and/or a new information element is introduced such that the network can control the user equipment autonomous prioritisation procedure. This new messaging is used to stop or resume the use of the autonomous prioritisation procedure. The messaging overrides the user equipment autonomous prioritisation procedure, which avoids a large signalling overhead and at the same time provides for network control of the user equipment during cell reselection.

There is a situation where the network should prioritise the frequency layer for cell reselection based on the unicast load. On the other hand, user equipment may be capable of dual reception and, hence, the user equipment may be able to receive the MBMS service on a different frequency carrier whilst camped on to another frequency carrier for unicast.

Initially, based on the subscription information, not all user equipment would have the requirement for service continuity for MBMS services. For example, depending on the subscription, even though the user equipment is capable of receiving an MBMS service, the network may not want to provide MBMS service continuity to this user. Hence, the network may not require the user equipment to prioritise the MBMS frequency in the cell reselection.

In view of the above, a mechanism is provided for the network to control the user equipment autonomous prioritisation. As mentioned above, if the user equipment autonomous frequency prioritisation is always allowed, all the user equipment who wish to receive the MBMS service will prioritise the carrier carrying that MBMS service during cell reselection. However, this can unintentionally result in more user equipment camping on the MBMS carrier and, hence, idle mode balancing becomes impacted.

In order to facilitate network control of autonomous prioritisation, a new signalling regime is proposed. The new signalling regime is intended to inform the user equipment whether user equipment autonomous prioritisation is enabled or disabled by the network. An example signalling flow is shown in Figure 2.

### Example 1 - User equipment specific signalling

In this example, the signalling is designed to be user equipment specific. The signalling indicates to the user equipment whether user equipment autonomous prioritisation for MBMS is enabled or not. The new messaging in this example is identified as MBMSfrequencypriority. In the current RRC standard, the dedicated frequency priority to be used for cell reselection is signalled in the RRC connection release message (this provides the frequency priority list mentioned above).

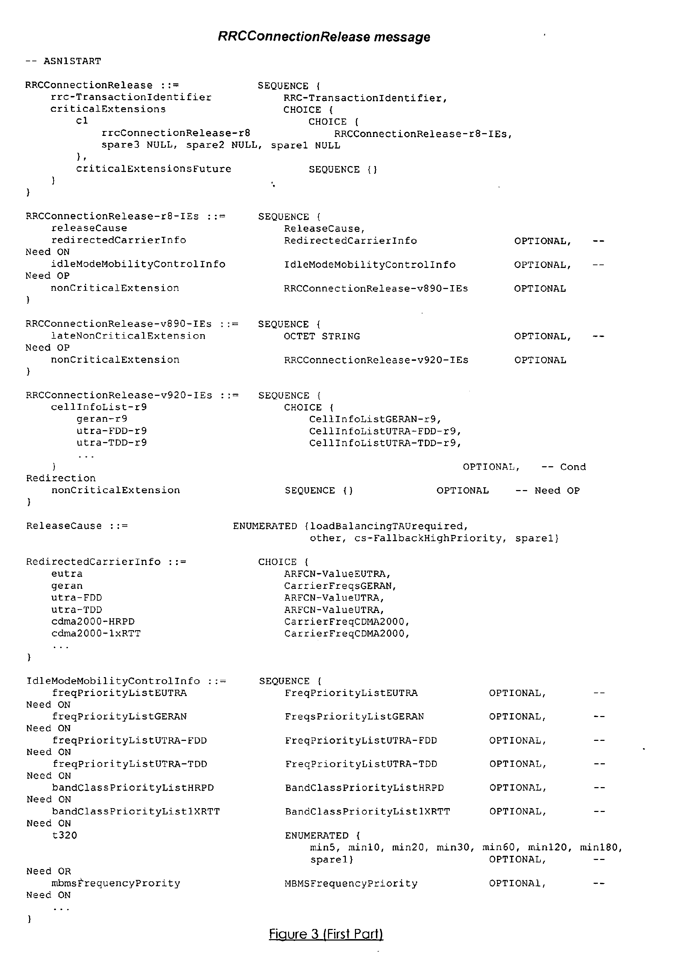

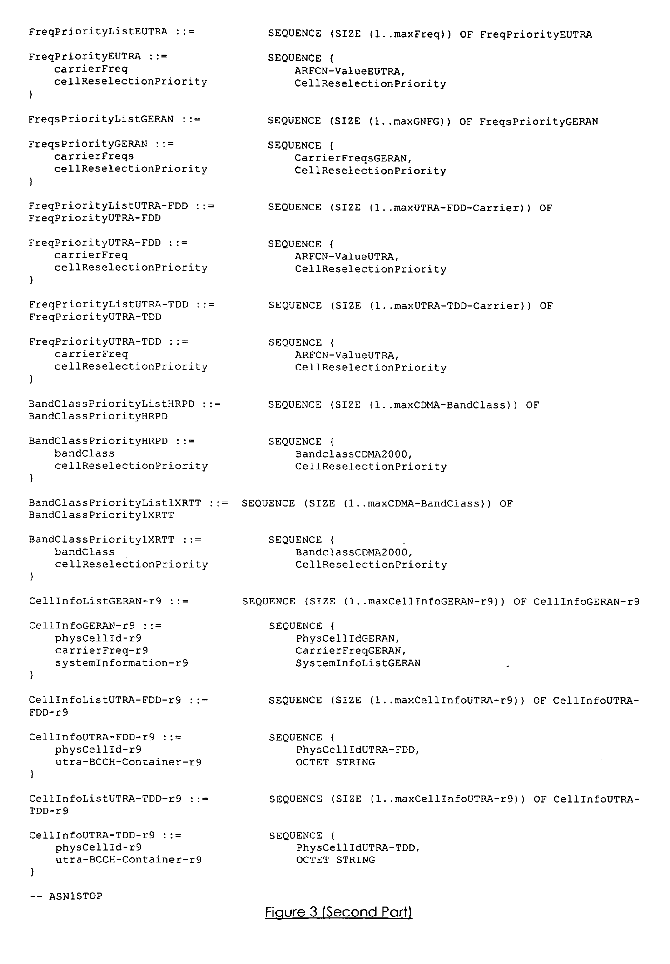

An MBMSfrequencypriority information element may be included in the RRC connection release message, as shown in Figure 3. The default value of the MBMSfrequencypriority may be set to enabled. The absence of the indication element may indicate the default value. If the MBMSfrequencypriority information element is enabled, then the user equipment will prioritise the MBMS frequency of the interested MBMS service during cell reselection. If the MBMSfrequencypriority information element is disabled, then the user equipment will not prioritise the MBMS frequency of the interested MBMS service during cell reselection and will instead follow the basic Release 8/9 cell reselection prioritisation procedure mentioned above. Hence, this approach activates and deactivates user equipment autonomous prioritisation for MBMS within specific user equipment.

### Example 2 - user equipment specific signalling - multiple frequencies

In this example, the MBMSfrequencypriority information element may indicate whether user equipment autonomous frequency prioritisation is enabled or disabled by the network for each carrier frequency. The MBMSfrequencypriority information element therefore may provide an indication for each neighbouring frequency. If the MBMSfrequencypriority information element is enabled, then the user equipment autonomous priority rule is applied for the corresponding frequency. That is to say, if the user equipment is interested in receiving an MBMS service and the MBMSfrequencypriority information element is enabled for that frequency, then the user equipment should apply the autonomous frequency priority rule. For example, the MBMSfrequencypriority information element may indicate that user equipment autonomous frequency priority should be used on frequency carriers F1 and F3, but not used on frequency carrier F2. Accordingly, should the MBMS service of interest to the user equipment occur on frequency carrier F1 or on F3, then user equipment autonomous MBMS frequency prioritisation can be applied to select either corresponding frequency carrier F1 or F3. However, if the MBMS service of interest is on frequency carrier F2, then user equipment autonomous MBMS frequency prioritisation is disabled and instead the priority list is utilised during cell reselection. If the priority list is the same as that mentioned above, then this would mean that the user equipment would attempt initially to attach to frequency carrier F1.

### Example 3 - New message format

In this example, rather than incorporating the MBMSfrequencypriority information element into existing RRC messaging, a separate RRC message may be used to signal the MBMSfrequencypriority information described.

### Example 4 - cell specific signalling

This example is similar to example 1, but the MBMSfrequencypriority information element is included in the SIB of the current cell to indicate that user equipment autonomous frequency prioritisation is enabled or disabled within that cell. This indication is provided for (applied to) all the neighbouring frequencies. Thus, if MBMSfrequencypriority is enabled, the user equipment applies the user equipment autonomous frequency prioritisation on the frequency carrier where the MBMS service of interest is provided. If the MBMSfrequencypriority information element is disabled, then the user equipment will not apply the user equipment autonomous frequency prioritisation for MBMS rule and instead the priority list is utilised during cell reselection. This is particularly beneficial where MBMS services are deployed only on one frequency layer. In the situation where MBMS services are deployed on only one frequency layer, SIB 5 could be used to indicate the frequency layer where the MBMS service is provided. Together with this frequency information, it is possible to indicate the MBMSfrequencypriority information element as well.

### Example 5 - cell specific signalling - multiple frequencies

This example is similar to example 2, but the MBMSfrequencypriority information element is cell broadcast using the system information blocks. The serving cell reselection priority is given in SIB 3. The new MBMSfrequencypriority information element may be added to SIB 3 to indicate the MBMSfrequencypriority information regarding the serving cell. This means that if the MBMSfrequencypriority information element is enabled, then user equipment autonomous MBMS frequency prioritisation is to be applied for the current frequency. If the user equipment is interested in receiving an MBMS service which is provided on the current frequency carrier, then the user equipment will prioritise the current frequency carrier for cell reselection. If the MBMSfrequencypriority information element is disabled, then the user equipment will ignore the user equipment autonomous frequency prioritisation for MBMS rule for the current frequency (that is to say that if a user equipment is interested in receiving an MBMS service provided on the current frequency and the MBMS frequency priority is disabled, then the user equipment will not apply the user equipment autonomous frequency prioritisation rule for the current frequency and instead the priority list is utilised during cell reselection).

The neighbouring cell reselection priority is given in SIB 5. The new MBMSfrequencypriority information element could be added to SIB 5 to indicate MBMSfrequencypriority information for the neighbouring cells. For each neighbouring cell frequency, an MBMSfrequencypriority information element is included to indicate whether the user equipment autonomous frequency priority for the corresponding frequency is enabled or disabled.

### Example 6 - group specific signalling

In this example, the MBMSfrequencypriority information element is cell broadcast using the system information blocks. The MBMSfrequencypriority information element controls (disables or enables) the user equipment autonomous frequency priority for a group of user equipment. For example, the signalling is such that only a group of user equipment (such as release 9 user equipment) are instructed to turn off the user equipment MBMS autonomous frequency priority and instead the priority list is utilised during cell reselection, whereas another group of user equipment (such as release 10 or release 11 user equipment) are instructed not to turn off the user equipment MBMS autonomous frequency priority.

### Example 7 - combined cell and user equipment specific signalling

In this example, a combination of the cell specific MBMSfrequencypriority information elements and user equipment specific MBMSfrequencypriority information elements mentioned in the examples above are used together to control the user equipment use of the autonomous MBMS frequency prioritisation rule. The network may broadcast cell specific MBMSfrequencypriority information elements. In addition, the network informs specific user equipment of applicable MBMSfrequencypriority information elements using dedicated RRC signalling. If the user equipment receives user equipment specific MBMSfrequencypriority information elements via dedicated RRC signalling, then those values or rules will override the information provided in the cell broadcast, cell specific MBMS frequency priority information element.

For example, if the MBMSfrequencypriority information element is included in the SIB of the current cell to indicate that user equipment autonomous frequency prioritisation is disabled within that cell, but the MBMSfrequencypriority information element of an RRC message indicates that the user equipment autonomous priority rule is applied for the frequency of the MBMS service of interest then the user equipment should apply the autonomous frequency priority rule. It will be appreciated that there are many other examples of such dual control.

In each of the above examples, the default value of MBMS frequency priority could be enabled and the absence of the information element may indicate the default value. Conversely, the default value for MBMS frequency priority may be disabled and the absence of the information element may indicate the default value.

A person of skill in the art would readily recognise that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A method, in a network access node, of controlling user equipment carrier selection during cell reselection, comprising:
detecting that user equipment carrier control during cell reselection is required; and
providing an indication to user equipment which indicates whether to utilise user equipment autonomous carrier prioritisation for Multimedia Broadcasts-Multimedia Services during cell reselection.

2. The method of claim 1, wherein said indication comprises an information element which indicates one of enabling and disabling user equipment autonomous carrier prioritisation for Multimedia Broadcasts-Multimedia Services during cell reselection.

3. The method of claim 1 or 2, wherein said information element indicates one of enabling and disabling user equipment autonomous carrier prioritisation for Multimedia Broadcasts-Multimedia Services during cell reselection for each of a plurality of carriers.

4. The method of claim 3, wherein said plurality of carriers comprise carriers of a serving cell and of neighbouring cells.

5. The method of any preceding claim, wherein said information element is provided to a specified user equipment to indicate to that user equipment one of enabling and disabling user equipment autonomous carrier prioritisation for Multimedia Broadcasts-Multimedia Services during cell reselection.

6. The method of any preceding claim, wherein said information element is provided to user equipment within a cell to indicate to that user equipment one of enabling and disabling user equipment autonomous carrier prioritisation for Multimedia Broadcasts-Multimedia Services during cell reselection.

7. The method of any preceding claim, wherein said information element is provided to at least one group of user equipment within a cell to indicate to each group of user equipment one of enabling and disabling user equipment autonomous carrier prioritisation for Multimedia Broadcasts-Multimedia Services during cell reselection.

8. The method of any preceding claim, wherein system information block 3 provides said information element indicating one of enabling and disabling user equipment autonomous carrier prioritisation for Multimedia Broadcasts-Multimedia Services during cell reselection on a carrier of said serving cell and system information block 5 provides said information element indicating one of enabling and disabling user equipment autonomous carrier prioritisation for Multimedia Broadcasts-Multimedia Services during cell reselection on carriers of said neighbouring cells.

9. The method of any preceding claim, wherein said detecting comprises detecting an overload on at least one carrier and said providing said indication comprises indicating to said user equipment to deactivate user equipment autonomous carrier prioritisation for Multimedia Broadcasts-Multimedia Services on said at least one carrier during cell reselection.

10. The method of any preceding claim, wherein said detecting comprises detecting a high priority subscription Multimedia Broadcasts-Multimedia Services user equipment and said providing said indication comprises indicating to said high priority subscription Multimedia Broadcasts-Multimedia Services user equipment to activate user equipment autonomous carrier prioritisation for Multimedia Broadcasts-Multimedia Services during cell reselection.

11. The method of any preceding claim, wherein said detecting comprises detecting a low priority subscription Multimedia Broadcasts-Multimedia Services user equipment and said providing said indication comprises indicating to said a low priority subscription Multimedia Broadcasts-Multimedia Services user equipment to deactivate user equipment autonomous carrier prioritisation for Multimedia Broadcasts-Multimedia Services during cell reselection.

12. A network access node operable to control user equipment carrier selection during cell reselection, comprising:
detection logic operable to detect that user equipment carrier control during cell reselection is required; and
transmission logic operable to provide an indication to user equipment which indicates whether to utilise user equipment autonomous carrier prioritisation for Multimedia Broadcasts-Multimedia Services during cell reselection.

13. A method, in user equipment, of controlling carrier selection during cell reselection, comprising:
receiving an indication which indicates whether to utilise user equipment autonomous carrier prioritisation for Multimedia Broadcasts-Multimedia Services during cell reselection; and
performing one of enabling and disabling user equipment autonomous carrier prioritisation for Multimedia Broadcasts-Multimedia Services during cell reselection in response to said indication.

14. The method of claim 13, wherein said information element indicates one of enabling and disabling user equipment autonomous carrier prioritisation for Multimedia Broadcasts-Multimedia Services during cell reselection for each of a plurality of carriers and said method comprises
determining whether Multimedia Broadcasts-Multimedia Services of interest are associated with at least one of said plurality of carrier and, if so, said performing comprises one of enabling and disabling user equipment autonomous carrier prioritisation for Multimedia Broadcasts-Multimedia Services during cell reselection in response to said indication for said at least one of said plurality of carriers.

15. User equipment operable to control carrier selection during cell reselection, comprising:
reception logic operable to receive an indication which indicates whether to utilise user equipment autonomous carrier prioritisation for Multimedia Broadcasts-Multimedia Services during cell reselection; and
control logic operable to perform one of enabling and disabling user equipment autonomous carrier prioritisation for Multimedia Broadcasts-Multimedia Services during cell reselection in response to said indication.

## Amended claims

### Amended claims in accordance with Rule 137(2) EPC.

**1.** A method, in a network access node (20), of controlling user equipment carrier selection during cell reselection, comprising:
detecting that user equipment carrier control during cell reselection is required; and
providing an indication to user equipment (50) which indicates whether to utilise user equipment autonomous carrier prioritisation for Multimedia Broadcasts-Multimedia Services during cell reselection, wherein said indication comprises an information element which indicates one of enabling and disabling user equipment autonomous carrier prioritisation for Multimedia Broadcasts-Multimedia Services during cell reselection for each of a plurality of carriers.

**2.** The method of claim 1, wherein said plurality of carriers comprise carriers of a serving cell and of neighbouring cells.

**3.** The method of claim 1 or 2, wherein said plurality of carriers comprise carriers of a serving cell and of neighbouring cells.

**4.** The method of any preceding claim, wherein said information element is provided in an Radio Resource Connection connection release message.

**5.** The method of any preceding claim, wherein said information element is provided to a specified user equipment to indicate to that user equipment one of enabling and disabling user equipment autonomous carrier prioritisation for Multimedia Broadcasts-Multimedia Services during cell reselection.

**6.** The method of any preceding claim, wherein said information element is provided to user equipment within a cell (30) to indicate to that user equipment one of enabling and disabling user equipment autonomous carrier prioritisation for Multimedia Broadcasts-Multimedia Services during cell reselection.

**7.** The method of any preceding claim, wherein said information element is provided to at least one group of user equipment within a cell to indicate to each group of user equipment one of enabling and disabling user equipment autonomous carrier prioritisation for Multimedia Broadcasts-Multimedia Services during cell reselection.

**8.** The method of any preceding claim, wherein system information block 3 provides said information element indicating one of enabling and disabling user equipment autonomous carrier prioritisation for Multimedia Broadcasts-Multimedia Services during cell reselection on a carrier of said serving cell and system information block 5 provides said information element indicating one of enabling and disabling user equipment autonomous carrier prioritisation for Multimedia Broadcasts-Multimedia Services during cell reselection on carriers of said neighbouring cells.

**9.** The method of any preceding claim, wherein said detecting comprises detecting an overload on at least one carrier and said providing said indication comprises indicating to said user equipment to deactivate user equipment autonomous carrier prioritisation for Multimedia Broadcasts-Multimedia Services on said at least one carrier during cell reselection,

**10.** The method of any preceding claim, wherein said detecting comprises detecting a high priority subscription Multimedia Broadcasts-Multimedia Services user equipment and said providing said indication comprises indicating to said high priority subscription Multimedia Broadcasts-Multimedia Services user equipment to activate user equipment autonomous carrier prioritisation for Multimedia Broadcasts-Multimedia Services during cell reselection.

**11.** The method of any preceding claim, wherein said detecting comprises detecting a low priority subscription Multimedia Broadcasts-Multimedia Services user equipment and said providing said indication comprises indicating to said a low priority subscription Multimedia Broadcasts-Multimedia Services user equipment to deactivate user equipment autonomous carrier prioritisation for Multimedia Broadcasts-Multimedia Services during cell reselection.

**12.** A network access node (20) operable to control user equipment carrier selection during cell reselection, comprising:
detection logic operable to detect that user equipment carrier control during cell reselection is required; and
transmission logic operable to provide an indication to user equipment (50) which indicates whether to utilise user equipment autonomous carrier prioritisation for Multimedia Broadcasts-Multimedia Services during cell reselection, wherein said indication comprises an information element which indicates one of enabling and disabling user equipment autonomous carrier prioritisation for Multimedia Broadcasts-Multimedia Services during cell reselection for each of a plurality of carriers.

**13.** A method, in user equipment (50), of controlling carrier selection during cell reselection, comprising:
receiving an indication which indicates whether to utilise user equipment autonomous carrier prioritisation for Multimedia Broadcasts-Multimedia Services during cell reselection; and
performing one of enabling and disabling user equipment autonomous carrier prioritisation for Multimedia Broadcasts-Multimedia Services during cell reselection in response to said indication, wherein said indication comprises an information element which indicates one of enabling and disabling user equipment autonomous carrier prioritisation for Multimedia Broadcasts-Multimedia Services during cell reselection for each of a plurality of carriers and said method comprises
determining whether Multimedia Broadcasts-Multimedia Services of interest are associated with at least one of said plurality of carrier and, if so, said performing comprises one of enabling and disabling user equipment autonomous carrier prioritisation for Multimedia Broadcasts-Multimedia Services during cell reselection in response to said indication for said at least one of said plurality of carriers.

**14.** User equipment (20) operable to control carrier selection during cell reselection, comprising:
reception logic operable to receive an indication which indicates whether to utilise user equipment autonomous carrier prioritisation for Multimedia Broadcasts-Multimedia Services during cell reselection; and
control logic operable to perform one of enabling and disabling user equipment autonomous carrier prioritisation for Multimedia Broadcasts-Multimedia Services during cell reselection in response to said indication, wherein the indication comprises an information element which indicates one of enabling and disabling user equipment autonomous carrier prioritisation for Multimedia Broadcasts-Multimedia Services during cell reselection for each of a plurality of carriers and the control logic is operable to determining whether Multimedia Broadcasts-Multimedia Services of interest are associated with at least one of the plurality of carriers and, if so, to perform one of enabling and disabling user equipment autonomous carrier prioritisation for Multimedia Broadcasts-Multimedia Services during cell reselection in response to the indication for the at least one of the plurality of carriers.

**15.** A computer program product operable, when executed on a computer, to perform the method steps of any one of claims 1 to 11 or 13.
